# EUROPÄISCHE PATENTANMELDUNG

(11) **EP 1 166 637 A2**
(43) Veröffentlichungstag der Anmeldung: **02.01.2002**
(21) Anmeldenummer: 01109726.8
(22) Anmeldetag: 20.04.2001
(51) Int. Cl.: A23B 7/005

(54) **Verfahren und Vorrichtung zum kontinuierlichen Sterilisieren eines stückigen Gemüse-bzw. Fruchtproductes**

(30) Priorität: 09.06.2000 DE 10028183
(71) Anmelder: SIG Combibloc International Systems GmbH, 52438 Linnich (DE)
(72) Erfinder: Auer, Dirk, 40670 Meerbusch (DE); Friedrich, Peter, Dr., 52441 Linnich (DE); Heep, Frank, 41470 Neuss (DE); Trautwein, Werner, 52511 Geilenkirchen (DE); Bauer, Jens, 01465 Langebrück (DE)
(74) Vertreter: Cohausz & Florack

(57) **Zusammenfassung**

Dargestellt und beschrieben sind ein Verfahren und eine Vorrichtung zum kontinuierlichen Sterilisieren eines stückigen Gemüse- bzw. Fruchtproduktes, bei dem bei geringem konstruktiven Aufwand eine einwandfreie Sterilisation in möglichst kurzer Zeit erfolgen kann, ohne die Qualität des Produktes zu beeinträchtigen, mit den folgenden Verfahrensschritte:
- Vorsortieren und ggf. Ausrichten des Ausgangsprodukts (P),
- Portionieren des Produkts in die jeweilige Abfüllmenge,
- Übergabe jeder Einzelportion in ein oben offenes Behältnis (1),
- Transport des Behältnisses (1) in einen Autoklaven,
- Entlüften des Behältnisses (1) mittels Dampfzufuhr und Druckaufbau im geschlossenen Behältnis (1) bei der gewünschten Sterilisationstemperatur für eine gewisse Zeitspanne zur Sterilisation,
- Unterbrechen der Dampfzufuhr und Aufrechterhaltung des Druckes mittels Sterilluft oder Schutzgas,
- indirektes und/oder direktes Abkühlen des Produktes,
- Öffnen der Autoklaven,
- Entnahme des Behältnisses (1) und
- aseptisches Entleeren des Behältnisses (1) in eine aseptische Packung (3).

## Beschreibung

Die Erfindung betrifft ein Verfahren zum kontinuierlichen Sterilisieren eines stückigen und vorzugsweise gewichtsmäßig vorportionierten Gemüse- bzw. Fruchtproduktes sowie eine Vorrichtung zur Durchführung eines solchen Verfahrens.

Aus dem Stand der Technik sind verschiedene Verfahren und Vorrichtungen zum kontinuierlichen Sterilisieren von stückigen Produkten bekannt. So beschreibt die DE 16 92 224 A1 ein Verfahren, bei dem die Sterilisation nach dem Abfüllen des Produktes in seine endgültige Verpackung erfolgt. Die befüllten, noch offenen Behältnisse werden einem Autoklaven zugeführt und in demselben verschlossen. Nachteilig bei diesem bekannten Verfahren ist insbesondere das Vorhandensein von Prozesswasser in der Verpackung.

Aus der DE 195 20 066 A1 ist es für den Bereich der Konservenherstellung auch bekannt, die Produkte erst abzufüllen, dann die Behältnisse fertig zu verschließen und erst abschließend die Sterilisation durchzuführen.

Schließlich sind aus der DE 198 05 773 A1 ein Verfahren und eine Vorrichtung zum Sterilisieren von Einzelportionen eines stückigen vorportionierten Produktes bekannt. Dieses bekannte Verfahren, von dem die Erfindung ausgeht, beinhaltet die folgenden Schritte:
- Vorsortieren und ggf. Ausrichten des Ausgangsproduktes,
- Portionieren des Produktes in die jeweilige Abfüllmenge,
- Übergabe jeder Einzelportion in ein oben offenes Behältnis,
- Transport des Behältnisses in einen Autoklaven,
- Entlüften des Behältnisses mittels Dampfzufuhr und Druckaufbau im geschlossenen Behältnis bei der gewünschten Sterilisationstemperatur für eine gewisse Zeitspanne zur Sterilisation,
- Unterbrechen der Dampfzufuhr und Aufrechterhaltung des Druckes mittels Sterilluft oder Schutzgas,
- indirektes und/oder direktes Abkühlen des Produktes,
- Öffnen des Autoklaven,
- Entnahme des Behältnisses und
- aseptisches Entleeren des Behältnisses in eine aseptische Verpackung.

Als Behältnisse werden Körbe aus Lochblech verwendet, die zum Entleeren einen schwenkbaren Boden aufweisen. Dies bedingt einerseits eine komplizierte Konstruktion und andererseits eine aufwendige Reinigung der gesamten Vorrichtung. Darüber hinaus ist die Sterilisation problematisch, da - je nach Schüttung des zu sterilisierenden Produktes im Innern des Korbes - der in die Druckkammer injizierte Dampf das Produkt nicht vollständig erreicht. Für eine vollständige Sterilisation muss dann das Produkt innerhalb des Autoklaven bewegt und/oder die Behandlungsdauer verlängert werden.

Ein weiterer Nachteil besteht darin, dass mit diesem Verfahren Inhaltsstoffe, Geschmacksstoffe, Salze etc. aus den zu sterilisierenden Produkten ausgewaschen werden und so dem Produkt verlorengehen. Eine negative Geschmacksabweichung ist daher nicht auszuschließen.

Aufgabe der Erfindung ist es daher, das zuvor näher beschriebene Verfahren und die entsprechende Vorrichtung so auszugestalten und weiterzubilden, dass bei geringem konstruktiven Aufwand eine einwandfreie Sterilisation in möglichst kurzer Zeit erfolgen kann, ohne die Qualität des Produktes zu beeinträchtigen.

Die Erfindung wird bezüglich des Verfahrens dadurch gelöst, dass die Dampfzufuhr durch Einblasen von Dampf unmittelbar im Bodenbereich des geschlossenen Behältnisses erfolgt.

Vorrichtungsmäßig erfolgt die Lösung der Aufgabe dadurch, dass eine Sortiereinheit, ggf. eine Ausrichteeinheit, eine Portioniereinheit, wenigstens ein Autoklav als Sterilisations- und Kühleinheit mit entsprechenden druckdichten Schleusen sowie mit einer Mehrzahl verschließbarer Behältnisse, die zur Aufnahme einer vorgegebenen Menge des Ausgangsproduktes dienen, so ausgestaltet sind, dass die Behältnisse zur gleichzeitigen Erhitzung aller Produktstücke wenigstens eine Dampfleitung aufweisen, deren Öffnung im Bodenbereich des Behältnisses mündet.

Durch den Dampfaustritt im Bodenbereich des Behälters, also unmittelbar unterhalb der Produktschüttung im Behältnis, findet eine zuverlässige Verdrängung der im Behältnis vorhandenen Luft und gleichzeitig eine gleichmäßige Erhitzung aller Produktstücke in dem sich dabei bildenden Kondensat ("Produktbrühe") statt.

Nach einer bevorzugten Ausgestaltung der Erfindung erfolgt die Kühlung unter Druck durch sukzessives Kühlen mittels Kühlmedium. Diese direkte Kühlung kann dabei mittels steriler Luft, sterilen gasförmigen Schutzgasen wie N₂, CO₂ od. dgl. einzeln oder nacheinander oder mit sterilem Kühlwasser erfolgen, und zwar ohne nennenswerte Flüssigkeitsrückstände.

Eine weitere Lehre der Erfindung sieht vor, dass die Übergabe der Behältnisse an die Füllstation drucklos und aseptisch erfolgt. Dabei können vor dem Verschließen der Packung Zusatzstoffe wie Öl, Butter, Gewürze/Zuckerlösungen od. dgl. steril injiziert werden.

Zweckmäßigerweise ist die gesamte erfindungsgemäße Vorrichtung einer aseptischen Füllmaschine vorgeschaltet, so dass auch die aseptische Dosierung in die Abfüllstation von der aseptischen Füllmaschine gesteuert werden kann.

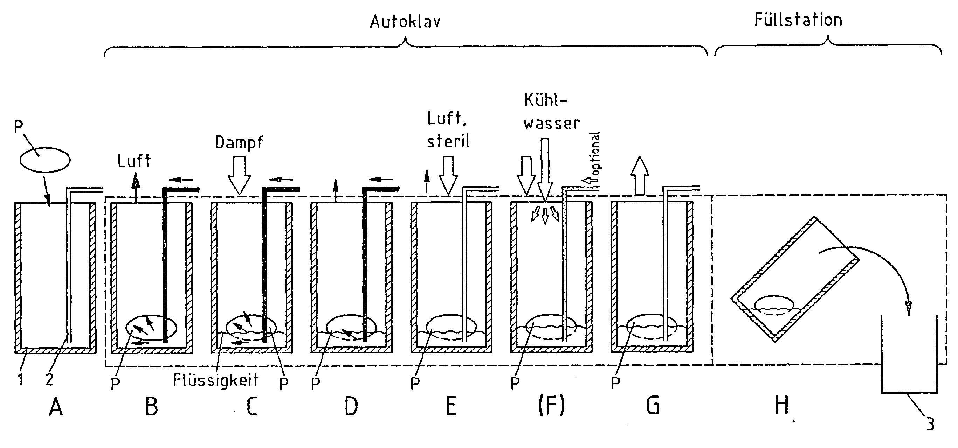

Die Erfindung wird nachfolgend anhand einer lediglich ein Ausführungsbeispiel darstellenden Zeichnung näher erläutert. In der einzigen Figur der Zeichnung sind die einzelnen Verfahrensschritte wie folgt schematisch wiedergegeben:
- A: Vorportioniertes Befüllen eines Behältnisses,
- B: Vorheizen/Entlüften,
- C: Erhitzen/Druckaufbau,
- D: Sterilisation,
- E: indirektes Kühlen,
- F: direktes Kühlen (optional),
- G: Abbauen des Druckes und
- H: Abfüllen des Produktes inkl. Produktflüssigkeit in eine aseptische Packung.

Die einzige Figur zeigt einen schematischen Sterilisationsvorgang. Ein mit einer vorportionierten Menge eines zu sterilisierenden Produktes gefülltes Behältnis 1 wird von der Station A einem nur angedeuteten Autoklaven zugeführt, der die Stationen B bis G umfasst.

In Station B wird das Behältnis 1 zunächst entlüftet und gleichzeitig vorgeheizt. Dazu wird über eine als Lanze 2 ausgeführte Leitung Dampf im Bodenbereich des Behältnisses 1 injiziert. Nachdem der Dampf die Luft im Behältnis 1 von unten verdrängt hat, wird der (zwischenzeitig geschlossene) gesamte Autoklav mit Dampf beaufschlagt (Station C), bis sich ein bestimmter Druck bei einer vorbestimmten Temperatur aufgebaut hat.

Für die Dauer des eigentlichen Sterilisationsprozesses werden Druck und Temperatur im Autoklaven geregelt (Station D). Nach der Sterilisation erfolgt die Kühlung (Station E) mittels einem Kühlmedium, wie beispielsweise von in den Autoklaven geleiteter Sterilluft bevorzugt zunächst unter Aufrechterhaltung des im Autoklaven herrschenden Druckes.

Zur Beschleunigung des Abkühlprozesses ist auch eine direkte Kühlung des Produktes P nach dem Unterbrechen der Dampf- bzw. Wassersterilisation und Einschaltung der externen Kühlung möglich (Station F).

Am Ende des Sterilisationsprozesses wird der Druck im Autoklaven abgebaut (Station G) und anschließend erfolgt in einer aseptischen Umgebung das Umfüllen des Produktes und der Produktflüssigkeit P aus dem Behältnis 1 in die eigentliche Packung 3, die danach aseptisch verschlossen wird (Station H).

## Patentansprüche

1. Verfahren zum kontinuierlichen Sterilisieren eines stückigen Gemüse- bzw. Fruchtproduktes mit den folgenden Verfahrensschritten:
- Vorsortieren und ggf. Ausrichten des Ausgangsprodukts,
- Portionieren des Produkts in die jeweilige Abfüllmenge,
- Übergabe jeder Einzelportion in ein oben offenes Behältnis,
- Transport des Behältnisses in einen Autoklaven,
- Entlüften des Behältnisses mittels Dampfzufuhr und Druckaufbau im geschlossenen Behältnis bei der gewünschten Sterilisationstemperatur für eine gewisse Zeitspanne zur Sterilisation,
- Unterbrechen der Dampfzufuhr und Aufrechterhaltung des Druckes mittels Sterilluft oder Schutzgas,
- indirektes und/oder direktes Abkühlen des Produktes,
- Öffnen der Autoklaven,
- Entnahme des Behältnisses und
- aseptisches Entleeren des Behältnisses in eine aseptische Packung,
**dadurch gekennzeichnet,daß** die Dampfzufuhr durch Einblasen von Dampf unmittelbar im Bodenbereich des geschlossenen Behältnisses (1) erfolgt.

2. Verfahren nach Anspruch 1,
**dadurch gekennzeichnet,dass** die Kühlung mittels steriler Luft erfolgt.

3. Verfahren nach Anspruch 1,
**dadurch gekennzeichnet, dass** die Kühlung mittels sterilen gasförmigen Schutzgasen wie N₂, CO₂ od. dgl. erfolgt.

4. Verfahren nach Anspruch 1,
**dadurch gekennzeichnet, dass** die Kühlung mittels sterilem Kühlwasser erfolgt.

5. Verfahren nach einem der Ansprüche 1 bis 4,
**dadurch gekennzeichnet, dass** die Übergabe der Behältnisse (1) an die Füllstation drucklos und aseptisch erfolgt.

6. Verfahren nach einem der Ansprüche 1 bis 5,
**dadurch gekennzeichnet, dass** vor dem Verschließen der aseptischen Packung (3) Zusatzstoffe wie Öl, Butter, Gewürze, Salz/Zuckerlösungen od. dgl. steril injiziert werden.

7. Vorrichtung zur Durchführung des Verfahrens nach einem der Ansprüche 1 bis 6 mit einer Sortiereinheit, ggf. einer Ausrichteeinheit, einer Portioniereinheit, wenigstens einem Autoklaven als Sterilisationseinheit und Kühleinheit mit entsprechenden druckdichten Schleusen sowie mit einer Mehrzahl verschließbarer Behältnisse (1) zur Aufnahme einer vorgegebenen Menge des Ausgangsprodukts (P),
**dadurch gekennzeichnet,dass** die Behältnisse (1) zur gleichzeitigen Erhitzung aller Produktstücke wenigstens eine Dampfleitung aufweisen, deren Öffnung im Bodenbereich des Behältnisses (1) mündet.

8. Vorrichtung nach Anspruch 7,
**dadurch gekennzeichnet, dass** die Dampfleitung/en als in jedes Behältnis (1) ragende Lanze/n (2) ausgeführt ist/sind.

9. Vorrichtung nach Anspruch 7,
**dadurch gekennzeichnet,dass** die Dampfleitung/en in die Wandung jedes Behältnis integriert ist/sind.
